# FASCICULE DE BREVET EUROPEEN

(11) **EP 4 437 259 B1**
(45) Date de publication et mention de la délivrance du brevet: **18.02.2026**
(21) Numéro de dépôt: 22826598.9
(22) Date de dépôt: 17.11.2022
(51) Int. Cl.: F16L 37/32

(54) **RACCORD DE COUPLAGE A OBTURATION RAPIDE**
SCHNELLVERSCHLUSSKUPPLUNG
QUICK-CLOSE COUPLER

(30) Priorité: 22.11.2021 FR 2112325
(43) Date de publication de la demande: 02.10.2024
(73) Titulaire: AKWEL, 01410 Champfromier (FR)
(72) Inventeur: BOREL, Stéphane, 84370 Bedarrides (FR); FAULSTROH, Peter, Sutton Coldfield B74 4EJ (GB)
(74) Mandataire: Cabinet Netter
(86) Numéro de dépôt international: PCT/FR2022/052116
(87) Numéro de publication internationale: WO 2023/089279

(56) Documents cités:
- US-A- 2 898 130
- US-A- 3 336 944
- US-A1- 2006 278 839
- US-A1- 2017 191 595
- US-A1- 2018 304 066
- US-B2- 8 602 057

## Description

### Domaine technique.

La présente invention concerne le domaine technique du transport de fluide tel que l'air ou l'eau, notamment dans un circuit de transfert de fluide. Elle s'applique plus particulièrement mais non exclusivement au transfert de fluide dans un circuit carburant, un circuit d'air ou de vide, un circuit vapeur ou bien un circuit de refroidissement d'un moteur, d'une batterie pour un véhicule électrique ou hybride, d'électroniques de puissance ou autres, par exemple au moyen d'un échangeur thermique. L'invention concerne plus particulièrement un raccord fluidique à obturation rapide pour transfert de fluide d'un tel circuit de transfert de fluide.

En général, un tel raccord fluidique comprend un connecteur femelle et un connecteur mâle présentant des formes complémentaires interne et externe leur permettant de coopérer par emmanchement. Ainsi, le connecteur femelle comprend un orifice récepteur configuré pour recevoir par complémentarité de forme un embout d'extrémité du connecteur mâle de sorte que les connecteurs mâle et femelle peuvent être réunis facilement l'un à l'autre par un simple mouvement d'engagement axial du connecteur mâle dans le connecteur femelle. Par ailleurs, un verrouillage de l'embout du connecteur mâle et du connecteur femelle peut être réalisé par des éléments de fixation rapide, tels que des clips, des pattes d'encliquetage et/ou des agrafes de fixation.

Afin d'assurer l'étanchéité au fluide de ce raccord lors de la séparation des deux connecteurs, un tel raccord comprend encore des soupapes ou valves rappelées élastiquement par des ressorts et placées respectivement dans les parties femelle et mâle qui sont en coopération lorsque le raccord est accouplé de manière à ce que la canalisation soit alors ouverte et, lorsque le raccord est désaccouplé, les valves viennent coopérer avec des sièges annulaires d'étanchéité formés respectivement dans les parties femelle et mâle.

### Technique antérieure.

On connaît déjà de l'art antérieur du brevet EP2042798 B1 un tel raccord. Dans le document, les deux valves se présentent sous la forme d'un corps allongé avec une tête d'obturation élargie et un nez de jonction de forme générale tronconique convergent en direction de l'extrémité libre proximale des deux connecteurs.

Dans ce brevet, le positionnement relatif des deux nez de jonction peut être imprécis et peut occasionner des défauts d'alignement axial des deux valves. Ceci peut être à l'origine d'une usure prématurée des corps de valves ce qui nécessite un remplacement complet du raccord usagé. Le défaut d'alignement axial des deux valves peut également dans certains cas rendre impossible le couplage des deux connecteurs.

US 2017/191595 A1 et US 8 602 057 B2 divulguent des connecteurs que résolvent les défauts d'alignement axial.

### Résumé de l'invention

A cet effet, l'invention a pour objet un raccord fluidique à obturation rapide selon la revendication 1.

Grâce au raccord de l'invention, le positionnement relatif des deux valves dans la configuration de couplage est facilité par la présence des deux surfaces d'extrémité élargies de jonction et de leurs reliefs d'encastrement. Le décalage de positionnement hors de l'axe des deux valves est rendu quasiment impossible ce qui permet d'une part de limiter les phénomènes d'usure prématurés des valves liés à un décalage de positionnement et d'autre part de garantir la réalisation systématique du couplage des connecteurs.

Cette conformation des surfaces de jonction des valves permet un auto-centrage des valves lors du couplage des deux connecteurs.

Dans un mode de réalisation préféré de l'invention, chaque tête d'obturation comprend une rainure circonférentielle de logement d'un joint d'étanchéité.

Selon l'invention, dans la configuration de couplage, les deux valves jointes forment un organe sensiblement symétrique de révolution autour de l'axe principal, avec une section longitudinale qui varie suivant un profil longitudinal sensiblement curviligne et progressif.

Dans un mode de réalisation préféré de l'invention, dans la configuration de couplage, les passages internes des deux connecteurs se rejoignent de façon sensiblement continue l'un de l'autre et la section du passage résultant varie de façon progressive et continue le long de l'axe principal.

Dans un mode de réalisation préféré de l'invention, le profil dudit tronçon a une forme générale sensiblement hyperboloïde.

Selon l'invention, la surface de jonction de l'une des valves est pourvue d'une cavité et la surface de jonction de l'autre des valves est en forme de sommet bombé conformé pour épouser la forme de la cavité.

Dans un mode de réalisation préféré de l'invention, la surface de jonction en forme de sommet bombé a une forme générale conique pourvue d'une extrémité en pointe de centrage.

Dans un mode de réalisation préféré de l'invention, l'une des têtes d'obturation a une forme générale ovoïde entière présentant un sommet définissant axialement des portions distale et proximale chacune de section décroissante progressive à partir du sommet et l'autre des têtes d'obturation a une forme générale ovoïde partielle, tronquée après le sommet dans sa portion proximale.

Dans un mode de réalisation préféré de l'invention, le passage interne de chaque connecteur s'évase dans une première région divergente puis se rétrécit dans une deuxième région convergente en direction d'une extrémité libre pour former une chambre dimensionnée pour loger la tête d'obturation en permettant l'écoulement du fluide autour de la tête hors du passage dans la configuration de couplage et pour former un contact étanche avec la tête d'obturation dans la configuration désaccouplée pour bloquer l'écoulement du fluide hors du passage.

Dans un mode de réalisation préféré de l'invention, le corps de chaque valve comprend un tenon de guidage distal prolongeant une portion distale de la tête d'obturation, autour duquel vient s'enrouler l'organe de rappel élastique et le connecteur comprend un support de fixation de ce tenon.

Dans un mode de réalisation préféré de l'invention, chaque connecteur comprend un alésage interne qui s'élargit jusqu'à une extrémité libre proximale et un embout d'insert adaptable à l'intérieur de l'alésage interne qui présente axialement un rétrécissement de section pour délimiter dans le passage interne une région proximale convergente qui se rétrécit sensiblement jusqu'à l'extrémité libre proximale du connecteur en prolongement d'une région distale divergente.

Dans un mode de réalisation préféré de l'invention, l'alésage interne présente au moins un épaulement radial périphérique et l'embout d'insert est configuré pour être introduit dans l'alésage interne en butée contre ledit épaulement.

Dans un mode de réalisation préféré de l'invention, le connecteur femelle comprend un corps de boîtier en forme générale de douille et le connecteur mâle comprend un corps de boîtier comprenant une portion d'insertion en forme générale de fiche configurée pour s'enficher, jusque dans une position finale de couplage, à l'intérieur d'une pince de couplage formée en périphérie du corps du connecteur femelle et de section axiale en forme générale de U.

Dans un mode de réalisation préféré de l'invention, le connecteur femelle comprend une jupe périphérique extérieure qui s'étend longitudinalement à partir d'une surface externe d'une paroi périphérique du connecteur femelle délimitant le passage interne et qui se prolonge au-delà d'une extrémité libre proximale de cette paroi périphérique.

Dans un mode de réalisation préféré de l'invention, le connecteur mâle comprend une paroi périphérique comprenant un profil interne étagé pourvu d'un gradin délimitant une portion d'extrémité d'insertion élargie en forme de fiche.

Dans un mode de réalisation préféré de l'invention, le raccord comprend un élément de verrouillage déplaçable dans une configuration de verrouillage dans laquelle ledit élément empêche les connecteurs de quitter la position finale de couplage.

Dans un mode de réalisation préféré de l'invention, le connecteur femelle comprend au moins une fente selon une direction circonférentielle et comprend en outre un cavalier engagé dans la fente pour retenir le connecteur mâle à l'intérieur du corps du connecteur femelle.

Dans un mode de réalisation préféré de l'invention, chaque connecteur femelle ou mâle est réalisé dans une matière plastique, par exemple par moulage par injection de la matière plastique.

### Brève description des dessins

D'autres caractéristiques et avantages de l'invention apparaîtront à la lumière de la description qui suit, faite en référence aux dessins annexes dans lesquels :
**Fig.1**

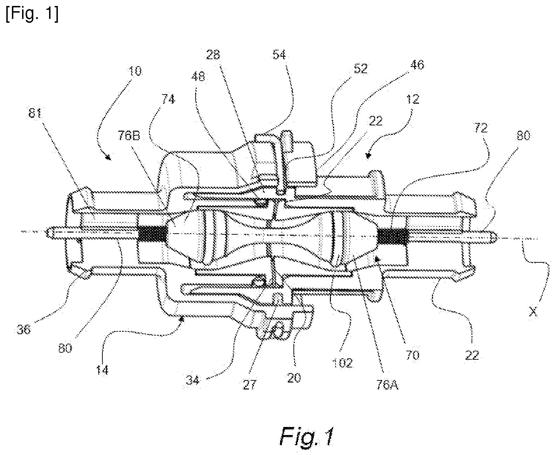

   [fig.1] représente une vue en perspective et en écorché d'un raccord de couplage à obturation rapide selon l'invention dans une configuration couplée ;
**Fig.2**

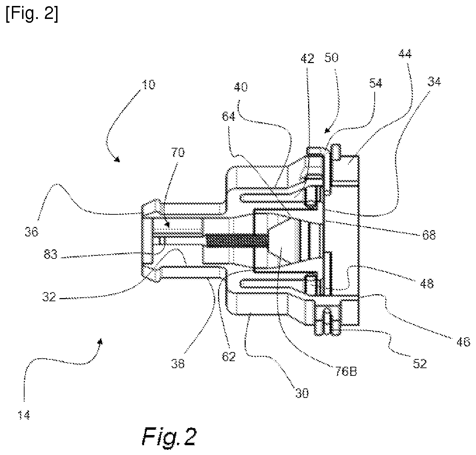

   [fig.2] représente une vue en perspective et en écorché d'un connecteur femelle du raccord de couplage de la figure 1 ;
**Fig.3**

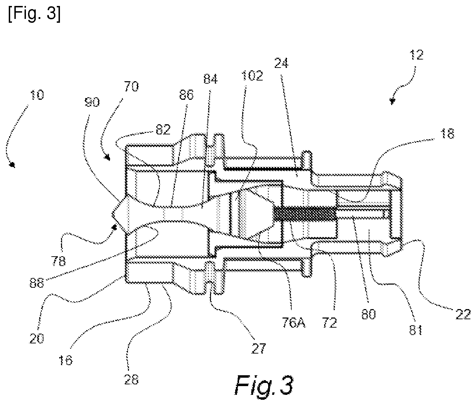

   [fig.3] représente une vue en perspective et en écorché d'un connecteur mâle du raccord de couplage de la figure 1 ;
**Fig.4**

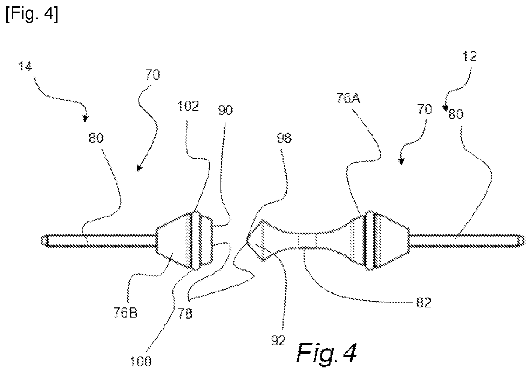

   [fig.4] représente une vue en perspective de deux corps de valves respectivement du connecteur femelle et du connecteur mâle de la figure 2 dans une configuration désaccouplée du raccord selon l'invention ;
**Fig.5**

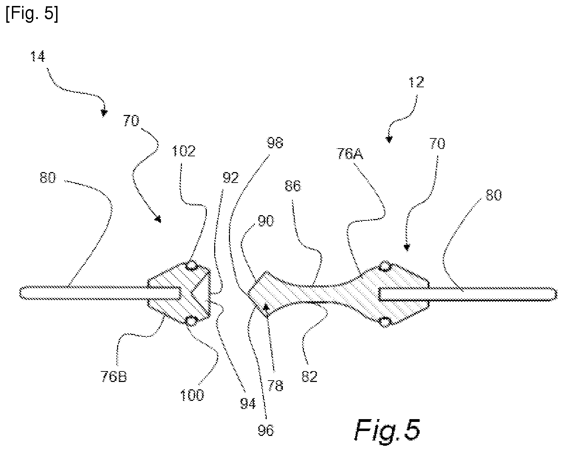

   [fig.5] représente une vue en coupe longitudinale de deux corps de valves respectivement du connecteur femelle et du connecteur mâle de la figure 2 dans une configuration désaccouplée du raccord selon l'invention ;
**Fig.6**

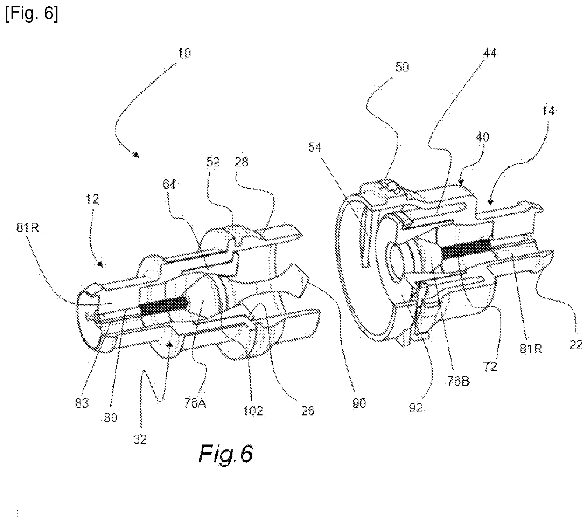

   [fig.6] illustre de façon schématique une étape d'assemblage du raccord de couplage selon l'invention.

### Description des modes de réalisation

On a représenté sur les figures 1 à 6, un raccord fluidique à obturation rapide selon l'invention. Ce raccord est désigné par la référence générale 10.

Ce raccord 10 comprend un élément de raccord mâle, désigné ci-après connecteur mâle 12 et un élément de raccord femelle désigné ci-après connecteur femelle 14.

Dans la suite de la description, les termes « axial », « longitudinal » et « radial » sont employés en référence à l'axe principal X. En outre, dans la suite de la description, les termes « proximal » et « distal » sont employés respectivement pour désigner les éléments du connecteur mâle situés du côté du connecteur femelle et du côté opposé au connecteur femelle. Cette désignation est également employée de façon analogue pour les éléments du connecteur femelle en référence à leur position par rapport au connecteur mâle. Ainsi, au sens de la présente description, un élément sera qualifié de proximal ou de distal selon qu'il est proche ou éloigné axialement d'une zone de couplage des connecteurs mâle 12 et femelle 14.

Les connecteurs 12 et 14 sont aptes à s'emmancher l'un dans l'autre pour la jonction amovible de deux conduits de fluide d'un circuit de transfert de fluide (non représentés). Chaque connecteur 12 ou 14 délimite un passage interne de fluide et le couplage des deux connecteurs 12 et 14 forme un passage interne résultant pour la circulation du fluide au travers du raccord 10.

Comme cela est représenté sur la figure 3, le connecteur mâle 12 comprend un corps de boîtier mâle 16 qui définit un passage interne 18 qui s'étend le long de l'axe X et traverse le corps mâle 16 de part en part. Le corps de boîtier mâle 16 comprend une extrémité proximale 20 de couplage avec le connecteur femelle 14 et une extrémité distale 22 de raccordement à un conduit de fluide d'un circuit de transfert de fluide (non représenté sur les figures). Par exemple, l'extrémité distale 22 est configurée pour être emmanchée dans un tuyau flexible. Les deux extrémités proximale 20 et distale 22 sont raccordées entre elles par une paroi périphérique 24 délimitant extérieurement le corps de boîtier mâle 16.

De façon analogue, comme cela est représenté sur la figure 2, le connecteur femelle 14 comporte un corps de boîtier femelle 30 qui définit un passage interne 32 qui s'étend le long de l'axe X et traverse le corps femelle 30 de part en part. Le corps de boîtier femelle 30 comprend une extrémité proximale 34 de couplage avec le connecteur mâle 12 et une extrémité distale 36 de raccordement à un conduit de fluide d'un circuit de transfert de fluide (non représentés sur les figures). Les deux extrémités 34 et 36 sont raccordées entre elles par une paroi périphérique 38 délimitant extérieurement le corps de boîtier femelle 30.

Dans le mode de réalisation préféré de l'invention, le corps de boîtier femelle 30 est en forme générale de douille et le corps de boîtier mâle 16 est en forme générale de fiche configuré pour s'enficher, jusque dans une position finale de couplage, à l'intérieur d'une pince de couplage 40 formée en périphérie du corps de boîtier femelle 30 et de section axiale (c'est-à-dire longitudinale, dans le sens de la longueur) en forme générale de U.

De préférence, comme cela est illustré sur la figure 2, la pince 40 forme une gorge 42 d'insertion d'une portion d'extrémité libre proximale 20 du corps de boîtier mâle 16. Dans cet exemple, cette portion d'extrémité d'insertion 28 se présente sous la forme d'une fiche annulaire.

A cet effet, de préférence, le connecteur femelle 14 comprend une jupe périphérique extérieure 44 qui s'étend longitudinalement à partir d'une surface externe de la paroi périphérique 38 du connecteur femelle 12 et qui se prolonge axialement au-delà de l'extrémité libre proximale 34 de cette paroi périphérique 38. Dans ce cas, et comme cela est bien visible sur la figure 2, le passage interne femelle 32 débouche sur un orifice proximal d'écoulement du fluide par son extrémité libre proximale 34 située en retrait axial d'une extrémité libre réceptrice 46 de la jupe périphérique 44. Par ailleurs, comme cela est illustré sur la figure 2, le connecteur femelle 14 comprend encore un joint d'étanchéité d'environnement 48 situé à l'intérieur de la gorge 42 afin d'assurer une étanchéité vis-à-vis de l'environnement extérieur du raccord 10.

Ces connecteurs 12 et 14 sont représentés dans une configuration désaccouplée sur la figure 5 dans laquelle le connecteur mâle 12 et le connecteur femelle 14 sont éloignés l'un de l'autre et dans une configuration accouplée sur la figure 1 dans laquelle le connecteur mâle 12 et le connecteur femelle 14 sont enfichés l'un dans l'autre.

Dans le mode de réalisation préféré, le raccord 10 comprend en outre un dispositif de verrouillage 50, déplaçable dans une configuration de verrouillage dans laquelle ce dispositif de verrouillage 50 empêche les connecteurs 12 et 14 de quitter la position finale de couplage.

A cet effet, dans l'exemple illustré sur la figure 2, le connecteur femelle 14 comprend au moins une fente 52, et de préférence deux fentes 52, selon une direction circonférentielle et comprend en outre un cavalier, par exemple en forme de broche 54 engagé dans les fentes 52 pour retenir le connecteur mâle 12 à l'intérieur du corps du connecteur femelle 14. Dans cet exemple, le dispositif de verrouillage 50 est formé ainsi au moins la broche 54 et par les fentes 52.

Par exemple, la broche 54 se compose d'un élément en fil métallique élastiquement déformable et comprend une paire de parties branches parallèles et une partie de connexion reliant les extrémités supérieures des branches l'une à l'autre. De façon classique, l'élément de verrouillage 54 a par exemple une forme générale de broche en U et présente deux branches sensiblement parallèles entre elles, propres à traverser le corps du boîtier femelle 30, à partir de l'extérieur, pour s'engager dans les fentes circonférentielles 52 du boîtier du connecteur femelle 30. Par ailleurs, le corps du boîtier 16 du connecteur mâle 12 présente une rainure circonférentielle 27 à l'intérieur de laquelle s'engage le cavalier 54.

Plus particulièrement, selon l'invention, chaque connecteur 12 ou 14 comprend une valve 70 déplaçable axialement dans le passage interne 18 ou 32 à l'encontre d'un organe de rappel élastique 72.

Par exemple, chaque valve 70 comprend un corps 74 pourvu d'une portion de section élargie 76 formant tête d'obturation et d'une extrémité libre proximale 78 de jonction avec l'autre valve 70.

En particulier, les valves 70 coopèrent l'une avec l'autre en se repoussant mutuellement vers une position d'ouverture fluidique dans une configuration de couplage des deux connecteurs 12 et 14 (figure 1) et les valves 70 sont rappelées élastiquement vers une position d'obturation étanche du passage interne 18 ou 32 au moyen de leurs têtes d'obturation 76 dans une configuration de désaccouplement des deux connecteurs 12 et 14 (figure 6).

A cet effet, comme cela est visible sur la figure 2 ou la figure 3, le passage interne 18 ou 32 du connecteur 12 ou 14 s'évase dans une première région divergente puis se rétrécit dans une deuxième région convergente en direction de l'extrémité libre proximale 20 ou 34 pour délimiter une chambre dimensionnée pour loger la tête d'obturation 76 dans la configuration de couplage tout en permettant l'écoulement du fluide autour de la tête 76 hors du passage 18 ou 32. Le passage interne 18 ou 32 délimite également, dans la deuxième portion convergente, après la chambre et en direction de l'extrémité proximale 20, un siège annulaire de contact étanche avec la tête d'obturation 76 dans la configuration désaccouplée ayant pour effet de bloquer l'écoulement du fluide hors du passage 18 ou 32.

Dans l'exemple illustré, chaque corps de connecteur 12 ou 14 comprend un alésage interne 60 qui délimite un profil interne qui s'élargit en direction de son extrémité libre proximale 18 ou 32 et un embout d'insert 64, adaptable à l'intérieur de l'alésage interne 60, pour délimiter un profil convergent dans le passage interne 18 ou 32 entre un bord d'extrémité distal 66 et un bord d'extrémité proximal 68 de l'embout 64.

Par exemple, l'alésage interne 60 présente au moins un épaulement radial périphérique 62. En outre, de préférence, l'embout d'insert 64 est configuré pour être introduit dans l'alésage interne 60 par l'extrémité proximale 20 ou 34 des connecteurs 12 ou 14 jusqu'à atteindre l'épaulement radial périphérique 62 contre lequel vient s'appuyer en butée le bord distal 66 de l'embout d'insert 64.

Cet embout d'insert 64 a par exemple une forme générale tubulaire avec une paroi pourvue d'une surface externe sensiblement cylindrique et pourvue d'une surface interne présentant axialement un rétrécissement de section du bord d'extrémité distal 66 vers son bord d'extrémité proximal 68.

Dans le mode de réalisation préféré de l'invention, chaque connecteur femelle ou mâle 12 ou 14 est réalisé dans une matière plastique, par exemple par moulage par injection de la matière plastique.

De préférence, l'embout d'insert 64 est assemblé par soudure par ultrasons au corps du connecteur 12 ou 14.

En configuration montée à l'intérieur de l'alésage interne 60, l'embout d'insert 64 délimite ainsi le profil du passage interne 18 ou 32 avec la deuxième région convergente qui se rétrécit sensiblement à partir de l'épaulement radial 62 de façon à prolonger la première région divergente qui s'évase sensiblement jusqu'à l'épaulement 62.

De préférence, l'embout d'insert 64 est par exemple soudé par rotation au corps de connecteur 12 ou 14.

Dans la configuration de couplage illustrée sur la figure 1, les passages internes 18 et 32 des deux connecteurs 12 et 14 se rejoignent de façon sensiblement continue l'un de l'autre et la section du passage résultant varie de façon progressive et continue le long de l'axe principal X.

Par ailleurs, de préférence, la paroi périphérique 24 du connecteur mâle 12 comprend un prolongement axial 28 étagé s'étendant axialement au-delà d'un orifice débouchant proximal du passage interne mâle 18 afin de former la portion d'extrémité d'insertion de section élargie 28 en forme de fiche configurée pour être engagée à l'intérieur de la pince 44 par l'extrémité libre réceptrice 46 du corps du connecteur femelle 14. De préférence, la paroi 24 délimite une surface interne comprenant un profil étagé pourvu d'un gradin 26. L'orifice proximal débouchant du passage interne 18 du connecteur mâle 12 est dans cet exemple formé par un orifice délimité par le bord proximal 68 de l'embout d'insert 64 du connecteur mâle 12. L'orifice proximal débouchant du passage interne 32 du connecteur femelle 14 est formé dans cet exemple par un orifice délimité par le bord proximal 68 de l'embout d'insert 64 du connecteur femelle 14.

De préférence, le corps de chaque valve 70 comprend encore un tenon de guidage distal 80 prolongeant une portion distale de la tête d'obturation 76, autour duquel vient s'enrouler l'organe de rappel élastique 72 et chaque connecteur 12 ou 14 comprend un support 81 de fixation de ce tenon 80. Par exemple, ce support 81 se présente sous forme d'une pluralité d'ailettes radiales 81R présentant un passage central 83 de réception et de guidage du tenon de guidage 80 et une pluralité de passages périphériques d'écoulement du fluide au travers des connecteurs. En outre, le support 81 présente une face d'extrémité proximale formant butée axiale de l'organe élastique 72.

Dans l'exemple illustré sur les figures, le tenon 80 se présente sous la forme d'une tige, de préférence cylindrique.

Dans la suite de la description, la tête d'obturation 76 du connecteur mâle 12 sera désignée par la référence 76A et la tête d'obturation 76 du connecteur femelle 14 sera désignée par la référence 76B.

Conformément à l'invention, le corps 72 de l'une des valves 70, dans cet exemple la valve 70 du connecteur mâle 12, comprend un tronçon 82 de raccordement de la tête d'obturation 76A à l'extrémité libre proximale de jonction 78 présentant une partie convergente 84 vers un col 86 et une partie divergente 88 jusqu'à l'extrémité libre 78 pour délimiter une surface d'extrémité élargie de jonction 90.

Comme cela est visible sur la figure 4, le profil dudit tronçon 82 a une forme générale sensiblement hyperboloïde. Dans cet exemple, le corps de valve 70 du connecteur mâle 12 a une forme allongée présentant des portions d'extrémités sensiblement évasées ce qui confère au corps de valve 70 du connecteur mâle 12 une forme générale hyperboloïde.

En outre, la tête d'obturation 76A de l'autre valve 70, dans cet exemple la valve 70 du connecteur femelle 14, est tronquée à son extrémité libre proximale 78 pour délimiter une surface d'extrémité élargie de jonction 92. Dans cet exemple, les deux surfaces élargies de jonction 90 et 92 coopèrent l'une avec l'autre dans la configuration de couplage des deux connecteurs 12 et 14. Par ailleurs, les surfaces de jonction 90 et 92 présentent des reliefs complémentaires d'encastrement 94 et 96.

De préférence et comme cela est illustré sur les figures 4 et 5, chaque tête d'obturation 76A ou 76B comprend en outre une rainure circonférentielle 100 de logement d'un joint d'étanchéité 102. Ce joint d'étanchéité 102 est configuré pour venir en contact étanche à l'intérieur du passage interne 18 ou 32 du connecteur 12 ou 14 dans la configuration désaccouplée.

On notera que dans la configuration de couplage illustrée sur la figure 1, les deux valves 70 jointes forment ensemble un organe sensiblement symétrique de révolution autour de l'axe principal X. Par ailleurs, cet organe présente une enveloppe de section longitudinale ayant une forme globalement curviligne et à variation progressive le long de l'axe du raccord 10. Cette conformation de l'organe permet de minimiser les chutes de pression, les turbulences et le risque de cavitation à l'intérieur du raccord 10. Dans le mode de réalisation illustré, l'organe présente deux formes ovoïdes reliées entre elle par une hyperboloïde de révolution. Autrement dit, de préférence, l'organe présente une section longitudinale qui varie suivant un profil longitudinal curviligne de façon progressive, c'est-à-dire sans palier.

Dans l'exemple illustré sur la figure 4, la surface de jonction 92 de l'une des valves 70 est pourvue d'une cavité 94 et la surface de jonction 90 de l'autre des valves 70 est en forme de sommet bombé 96 conformé pour épouser la forme de la cavité 94.

De préférence, comme cela est visible sur la figure 5, la surface d'extrémité 92 en forme de sommet bombé 96 a une forme générale conique pourvue d'une extrémité en pointe de centrage 98. Par ailleurs, de préférence, la cavité 94 a une forme générale conique complémentaire.

Dans le mode de réalisation préféré de l'invention illustré sur les figures 1 à 6, l'une des têtes d'obturation 76A a une forme générale ovoïde entière présentant un sommet délimitant axialement des portions distale et proximale chacune de section décroissante progressive à partir du sommet et l'autre des têtes d'obturation 76B a une forme générale ovoïde partielle, tronquée après le sommet dans sa portion proximale.

On va maintenant décrire en référence aux figures 1 à 6 les principaux aspects du fonctionnement du raccord selon l'invention.

Initialement, les connecteurs mâle 12 et femelle 14 sont dans une configuration désaccouplée comme illustré dans la figure 6. Dans cette configuration, les valves 70 sont rappelées élastiquement dans une position d'obturation dans laquelle chaque tête d'obturation 76A ou 76B est en contact étanche avec la paroi interne du passage interne 18 ou 32 dans la deuxième partie convergente du passage 18 ou 32 qui comprend le siège annulaire d'étanchéité.

Puis, le connecteur mâle 12 est inséré dans l'extrémité réceptrice 34 du connecteur femelle 14, par exemple en engageant la portion d'insertion en forme de fiche 28 du connecteur mâle 12 à l'intérieur de la pince 44 d'enfichage du connecteur femelle 14.

Dans cette configuration de couplage, les deux valves 70 coopèrent par leurs surfaces de jonction 90 et 92 en se repoussant mutuellement. Dans cette configuration de couplage, la tête d'obturation 76A ou 76B de chacune des valves 70 se positionne à l'intérieur de la chambre définie dans le passage interne 18 ou 32 de sorte que le fluide peut s'écouler librement en contournant le profil de la tête d'obturation 76A ou 76B.

Le positionnement des deux corps de valve 70 est précis grâce à leur conformation particulière définie par l'invention. En effet, les deux surfaces de jonction 90 et 92 sont relativement larges ce qui permet d'effectuer un positionnement relatif facilité par la présence additionnelle d'une pointe de centrage 98 formée sur l'une des deux têtes d'obturation 76A et 76B et d'une cavité complémentaire 94 de réception du sommet bombé 96 en forme de pointe 98.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Raccord fluidique à obturation rapide (10) comprenant un connecteur mâle (12) et un connecteur femelle (14) aptes à s'emmancher l'un dans l'autre, chaque connecteur (12, 14) comprenant un passage interne de fluide (18, 32) s'étendant selon un axe principal (X) et une valve (70) déplaçable axialement dans le passage interne de fluide (18, 32) à l'encontre d'un organe de rappel élastique (72), cette valve (70) comprenant un corps (74) pourvu d'une portion de section élargie (76) formant tête d'obturation (76A, 76B) et d'une extrémité libre proximale (78) de jonction avec la valve (70) de l'autre connecteur, dans lequel les valves (70) du connecteur mâle (12) et du connecteur femelle (14) coopèrent l'une avec l'autre en se repoussant mutuellement vers une position d'ouverture fluidique dans une configuration de couplage des connecteurs mâle et femelle (12, 14), et dans lequel ces valves (70) sont rappelées chacune élastiquement vers une position d'obturation étanche du passage interne de fluide (18, 32) au moyen de leurs têtes d'obturation respective (76A, 76B) dans une configuration de désaccouplement des connecteurs mâle et femelle (12, 14), le corps (74) de la valve (70) de l'un du connecteur mâle (12) et du connecteur femelle (14) comprenant un tronçon de raccordement (82) s'étendant de sa tête d'obturation (76B) à son extrémité libre (78), ce tronçon de raccordement (82) comprenant une partie convergente (84) vers un col (86) et une partie divergente (88) jusqu'à cette extrémité libre (78) pour délimiter une surface d'extrémité élargie (90), tandis que et la tête d'obturation (76A) de la valve (70) de l'autre connecteur est tronquée à son extrémité libre (78) pour délimiter une surface d'extrémité élargie (92), la surface d'extrémité élargie (92) de la valve (70) de l'un des connecteurs mâle (12) et femelle (14) est pourvue d'une cavité, tandis que la surface d'extrémité élargie (90) de la valve (70) de l'autre connecteur est en forme de sommet bombé, conformé de manière à épouser la forme de ladite cavité, de telle sorte que, dans la configuration de couplage, les surfaces d'extrémité élargies de ces valves (70) se joignent l'une à l'autre par l'intermédiaire du sommet bombé et de ladite cavité pour former un organe sensiblement symétrique de révolution autour de l'axe principal (X), cet organe présentant une section longitudinale qui varie suivant un profil longitudinal curviligne et progressif.

2. Raccord (10) selon la revendication précédente, dans lequel chaque tête d'obturation (76A, 76B) comprend une rainure circonférentielle de logement d'un joint d'étanchéité.

3. Raccord (10) selon l'une quelconque des revendications précédentes, dans lequel dans la configuration de couplage, les passages internes (18, 32) des deux connecteurs (12, 14) se rejoignent de façon sensiblement continue l'un de l'autre et la section du passage résultant varie de façon progressive et continue le long de l'axe principal (X).

4. Raccord (10) selon l'une quelconque des revendications précédentes, dans lequel le profil dudit tronçon (82) a une forme générale sensiblement hyperboloïde.

5. Raccord (10) selon l'une quelconque des revendications précédentes, dans lequel la surface de jonction (90) en forme de sommet bombé a une forme générale conique pourvue d'une extrémité en pointe de centrage (98).

6. Raccord (10) selon l'une quelconque des revendications précédentes, dans lequel l'une des têtes d'obturation (76A, 76B) a une forme générale ovoïde entière présentant un sommet définissant axialement des portions distale et proximale chacune de section décroissante progressive à partir du sommet et l'autre des têtes d'obturation (76A, 76B) a une forme générale ovoïde partielle, tronquée après le sommet dans sa portion proximale.

7. Raccord (10) selon l'une quelconque des revendications précédentes, dans lequel le passage interne (18, 32) de chaque connecteur (12, 14) s'évase dans une première région divergente puis se rétrécit dans une deuxième région convergente en direction d'une extrémité libre proximale (20, 34) pour former une chambre dimensionnée pour loger la tête d'obturation (76A, 76B) en permettant l'écoulement du fluide autour de la tête (76A, 76B) hors du passage (18, 32) dans la configuration de couplage et pour former un contact étanche avec la tête d'obturation (76A, 76B) dans la configuration désaccouplée pour bloquer l'écoulement du fluide hors du passage (18, 32).

8. Raccord (10) selon l'une quelconque des revendications précédentes, dans lequel le corps (74) de chaque valve (70) comprend un tenon de guidage distal prolongeant une portion distale de la tête d'obturation (76A, 76B), autour duquel vient s'enrouler l'organe de rappel élastique (72) et le connecteur (12, 14) comprend un support (81) de fixation de ce tenon.

9. Raccord (10) selon l'une quelconque des revendications précédentes, dans lequel chaque connecteur (12, 14) comprend un alésage interne (60) qui s'élargit jusqu'à une extrémité libre proximale (22, 34) et un embout d'insert (64) adaptable à l'intérieur de l'alésage interne (60) qui présente axialement un rétrécissement de section pour délimiter dans le passage interne (18, 32) une région proximale convergente qui se rétrécit sensiblement jusqu'à l'extrémité libre proximale (22, 34) du connecteur (12, 14) en prolongement d'une région distale divergente.

10. Raccord (10) selon la revendication précédente, dans lequel l'alésage interne (60) présente au moins un épaulement radial périphérique (62) et l'embout d'insert (64) est configuré pour être introduit dans l'alésage interne (60) en butée contre ledit épaulement.

11. Raccord (10) selon l'une quelconque des revendications précédentes, dans lequel le connecteur femelle (14) comprend un corps de boîtier (30) en forme générale de douille et le connecteur mâle (12) comprend un corps de boîtier (18) comprenant une portion d'insertion (28) en forme générale de fiche configurée pour s'enficher, jusque dans une position finale de couplage, à l'intérieur d'une pince (40) de couplage formée en périphérie du corps du connecteur femelle (14) et de section axiale en forme générale de U.

12. Raccord (10) selon l'une quelconque des revendications précédentes, dans lequel le connecteur femelle (14) comprend une jupe périphérique extérieure (44) qui s'étend longitudinalement à partir d'une surface externe d'une paroi périphérique (38) du connecteur femelle (14) délimitant le passage interne (32) et qui se prolonge au-delà d'une extrémité libre proximale (34) de cette paroi périphérique (38).

13. Raccord (10) selon l'une quelconque des revendications précédentes, dans lequel le connecteur mâle (12) comprend une paroi périphérique (24) comprenant un profil interne étagé pourvu d'un gradin (26) délimitant une portion d'extrémité d'insertion élargie en forme de fiche (28).

14. Raccord (10) selon la revendication précédente, comprenant un élément de verrouillage (50) déplaçable dans une configuration de verrouillage dans laquelle ledit élément (50) empêche les connecteurs (12, 14) de quitter la position finale de couplage.

15. Raccord (10) selon la revendication précédente, dans lequel le connecteur femelle (14) comprend au moins une fente (52) selon une direction circonférentielle et comprend en outre un cavalier (54) engagé dans la fente (52) pour retenir le connecteur mâle (12) à l'intérieur du corps (16) du connecteur femelle (14).

16. Raccord (10) selon l'une quelconque des revendications précédentes, dans lequel chaque connecteur femelle ou mâle (12, 14) est réalisé dans une matière plastique, par exemple par moulage par injection de la matière plastique.

## Patentansprüche

1. Schnellverschluss-Fluidanschluss (10) umfassend einen Steckverbinder (12) und einen Buchsenverbinder (14), die ineinander gesteckt werden können, wobei jeder Verbinder (12, 14) einen inneren Fluiddurchgang (18, 32) umfasst, der sich entlang einer Hauptachse (X) erstreckt, und ein Ventil (70), das axial in dem inneren Fluiddurchgang (18, 32) gegen ein elastisches Rückstellorgan (72) verschiebbar ist, wobei dieses Ventil (70) einen Körper (74) umfasst, der mit einem einen Verschlusskopf (76A, 76B) bildenden Abschnitt mit vergrößertem Querschnitt (76) und einem proximalen freien Ende (78) zu der Verbindung mit dem Ventil (70) des anderen Verbinders versehen ist, wobei die Ventile (70) des Steckverbinders (12) und des Buchsenverbinders (14) miteinander zusammenwirken, indem sie sich gegenseitig in Richtung auf eine fluidische Öffnungsposition in einer Kupplungskonfiguration des Steck- und des Buchsenverbinders (12, 14) zurückschieben, und wobei diese Ventile (70) jeweils mittels ihres jeweiligen Verschlusskopfs (76A, 76B) in einer Entkupplungskonfiguration des Steck- und Buchsenverbinders (12, 14) elastisch in Richtung auf eine dichte Verschlussposition des inneren Fluiddurchgangs (18, 32) zurückgedrückt werden, wobei der Körper (74) des Ventils (70) eines des Steckverbinders (12) und des Buchsenverbinders (14) einen Verbindungsabschnitt (82) umfasst, der sich von seinem Verschlusskopf (76B) bis zu seinem freien Ende (78) erstreckt, wobei dieser Verbindungsabschnitt (82) einen konvergierenden Teil (84) in Richtung auf einen Hals (86) und einen divergierenden Teil (88) in Richtung auf dieses freie Ende (78) umfasst, um eine erweiterte Endfläche (90) zu begrenzen, während der Verschlusskopf (76A) des Ventils (70) des anderen Verbinders an seinem freien Ende (78) abgestumpft ist, um eine erweiterte Endfläche (92) zu begrenzen, wobei die erweiterte Endfläche (92) des Ventils (70) eines des Steck- (12) und des Buchsenverbinders (14) mit einem Hohlraum versehen ist, während die erweiterte Endfläche (90) des Ventils (70) des anderen Verbinders die Form einer gewölbten Spitze hat, die so ausgebildet ist, dass sie sich an die Form des Hohlraums anpasst, so dass sich die erweiterten Endflächen dieser Ventile (70) in der Kupplungskonfiguration über die gewölbte Spitze und den Hohlraum zusammenfügen, um ein im Wesentlichen um die Hauptachse (X) symmetrisches Drehorgan zu bilden, wobei dieses Organ einen Längsquerschnitt aufweist, der gemäß einem kurvenförmigen und progressiven Längsprofil variiert.

2. Anschluss (10) nach dem vorhergehenden Anspruch, wobei jeder Verschlusskopf (76A, 76B) eine umlaufende Aufnahmenut für eine Dichtung umfasst.

3. Anschluss (10) nach einem der vorhergehenden Ansprüche, wobei sich in der Kupplungskonfiguration die inneren Durchgänge (18, 32) der beiden Verbinder (12, 14) im Wesentlichen kontinuierlich miteinander zusammenfügen und der Querschnitt des resultierenden Durchgangs entlang der Hauptachse (X) progressiv und kontinuierlich variiert.

4. Anschluss (10) nach einem der vorhergehenden Ansprüche, wobei das Profil des Abschnitts (82) eine im Wesentlichen hyperboloide allgemeine Form aufweist.

5. Anschluss (10) nach einem der vorhergehenden Ansprüche, wobei die Verbindungsfläche (90) mit der Form einer gewölbten Spitze eine konische allgemeine Form aufweist, die mit einem zentrierenden spitzen Ende (98) versehen ist.

6. Anschluss (10) nach einem der vorhergehenden Ansprüche, wobei einer der Verschlussköpfe (76A, 76B) eine vollständige ovale allgemeine Form aufweist, die eine Spitze aufweist, die axial distale und proximale Abschnitte mit jeweils von der Spitze aus progressiv abnehmenden Querschnitten definiert, und der andere der Verschlussköpfe (76A, 76B) eine teilweise ovale allgemeine Form aufweist, die nach der Spitze in ihrem proximalen Abschnitt abgestumpft ist.

7. Anschluss (10) nach einem der vorhergehenden Ansprüche, wobei sich der innere Durchgang (18, 32) jedes Verbinders (12, 14) in einem ersten divergierenden Bereich aufweitet und dann in einem zweiten konvergierenden Bereich in Richtung auf ein proximales freies Ende (20, 34) verengt, um eine Kammer zu bilden, die derart bemessen ist, dass sie den Verschlusskopf (76A, 76B) aufnimmt und dadurch den Fluss des Fluids um den Kopf (76A, 76B) aus dem Durchgang (18, 32) in der Kupplungskonfiguration ermöglicht, und um einen dichten Kontakt mit dem Verschlusskopf (76A, 76B) in der entkuppelten Konfiguration zu bilden, um den Fluss des Fluids aus dem Durchgang (18, 32) zu blockieren.

8. Anschluss (10) nach einem der vorhergehenden Ansprüche, wobei der Körper (74) jedes Ventils (70) einen distalen Führungszapfen umfasst, der einen distalen Abschnitt des Verschlusskopfs (76A, 76B) verlängert, um den sich das elastische Rückstellorgan (72) wickelt, und der Verbinder (12, 14) einen Halter (81) zu der Befestigung dieses Zapfens umfasst.

9. Anschluss (10) nach einem der vorhergehenden Ansprüche, wobei jeder Verbinder (12, 14) eine innere Bohrung (60) umfasst, die sich bis zu einem proximalen freien Ende (22, 34) erweitert, und eine Einsatzspitze (64), die innerhalb der inneren Bohrung (60) adaptierbar ist, die axial eine Querschnittsverengung aufweist, um in dem inneren Durchgang (18, 32) einen konvergierenden proximalen Bereich zu begrenzen, der sich bis zu dem proximalen freien Ende (22, 34) des Verbinders (12, 14) in Verlängerung eines divergierenden distalen Bereichs im Wesentlichen verengt.

10. Anschluss (10) nach dem vorhergehenden Anspruch, wobei die innere Bohrung (60) mindestens eine umlaufende radiale Schulter (62) aufweist und die Einsatzspitze (64) so eingerichtet ist, dass sie in die innere Bohrung (60) bis zu dem Anschlag an der Schulter eingeführt wird.

11. Anschluss (10) nach einem der vorhergehenden Ansprüche, wobei der Buchsenverbinder (14) einen Gehäusekörper (30) mit einer allgemeinen Form einer Buchse umfasst und der Steckverbinder (12) einen Gehäusekörper (18) umfasst, der einen Einsatzabschnitt (28) mit einer allgemeinen Steckerform umfasst, der so eingerichtet ist, dass er bis zu einer endgültigen Kupplungsposition in eine Kupplungsklemme (40) eingesteckt werden kann, die an dem Umfang des Körpers des Buchsenverbinders (14) gebildet ist und einen axialen Querschnitt in allgemeiner U-Form aufweist.

12. Anschluss (10) nach einem der vorhergehenden Ansprüche, wobei der Buchsenverbinder (14) einen äußeren Umfangsmantel (44) umfasst, der sich längs von einer Außenfläche einer Umfangswand (38) des Buchsenverbinders (14) aus erstreckt, die den inneren Durchgang (32) begrenzt, und sich über ein proximales freies Ende (34) dieser Umfangswand (38) hinaus erstreckt.

13. Anschluss (10) nach einem der vorhergehenden Ansprüche, wobei der Steckverbinder (12) eine Umfangswand (24) umfasst, die ein gestuftes Innenprofil umfasst, das mit einer Stufe (26) versehen ist, die einen verbreiterten steckerförmigen Einsatzendabschnitt (28) begrenzt.

14. Anschluss (10) nach dem vorhergehenden Anspruch, der ein Verriegelungselement (50) umfasst, das in einer Verriegelungskonfiguration beweglich ist, wobei das Element (50) verhindert, dass die Verbinder (12, 14) die endgültige Kupplungsposition verlassen.

15. Anschluss (10) nach dem vorhergehenden Anspruch, wobei der Buchsenverbinder (14) mindestens einen Schlitz (52) in einer Umfangsrichtung umfasst und ferner einen Jumper (54) umfasst, der in den Schlitz (52) eingreift, um den Steckverbinder (12) in dem Inneren des Körpers (16) des Buchsenverbinders (14) zu halten.

16. Anschluss (10) nach einem der vorhergehenden Ansprüche, wobei jeder Buchsen- oder Steckverbinder (12, 14) aus einem Kunststoff hergestellt ist, beispielsweise durch Spritzgießen des Kunststoffs.

## Claims

1. A quick-close fluidic coupler (10) comprising a male connector (12) and a female connector (14) capable of fitting together, each connector (12, 14) comprising an inner fluid duct (18, 32) extending according to a main axis (X) and a valve (70) that is axially displaceable within the inner fluid duct (18, 32) against an elastic return member (72), this valve (70) comprising a body (74) provided with a widened section portion (76) forming a closing head (76A, 76B) and with a proximal free end (78) for joining with the valve (70) of the other connector, wherein the valves (70) of the male connector (12) and of the female connector (14) cooperate with one another by mutually pushing one another into a fluidically open position in a coupling configuration of the male and female connectors (12, 14), and wherein each of these valves (70) is elastically returned to a position of sealingly closing the inner fluid duct (18, 32) by means of their respective closing head (76A, 76B) in a configuration in which the male and female connectors (12, 14) are uncoupled, the body (74) of the valve (70) of one amongst the male connector (12) and the female connector (14) comprising a connecting section (82) extending from its closing head (76B) to its free end (78), this connecting section (82) comprising a portion (84) that is convergent towards a neck (86) and a portion (88) that is divergent up to this free end (78) so as to delimit a widened end surface (90), whereas the closing head (76A) of the valve (70) of the other connector is truncated at its free end (78) so as to delimit a widened end surface (92), the widened end surface (92) of the valve (70) of one amongst the male (12) and female (14) connectors is provided with a cavity, whereas the widened end surface (90) of the valve (70) of the other connector is shaped like a domed top, designed so as to fit the shape of said cavity, such that, in the coupling configuration, the widened end surfaces of these valves (70) join together via the domed top and via said cavity to form a substantially rotationally symmetrical member around the main axis (X), this member having a longitudinal section that varies according to a curvilinear and progressive longitudinal profile.

2. The coupler (10) according to the preceding claim, wherein each closing head (76A, 76B) comprises a circumferential groove for accommodating a seal.

3. The coupler (10) according to any one of the preceding claims, wherein in the coupling configuration, the inner ducts (18, 32) of the two connectors (12, 14) join each other substantially continuously, and the section of the resulting duct varies progressively and continuously along the main axis (X).

4. The coupler (10) according to any one of the preceding claims, wherein the profile of said section (82) has a substantially hyperboloid general shape.

5. The coupler (10) according to any one of the preceding claims, wherein the joining surface (90) shaped like a domed top has a conical general shape provided with a centring point end (98).

6. The coupler (10) according to any one of the preceding claims, wherein one of the closing heads (76A, 76B) has a complete ovoid general shape having a top that axially defines distal and proximal portions, each of which has a progressively decreasing section from the top and the other closing head (76A, 76B) has a partial ovoid general shape, truncated after the top in its proximal portion.

7. The coupler (10) according to any one of the preceding claims, wherein the inner duct (18, 32) of each connector (12, 14) flares in a first divergent region then narrows in a second convergent region in the direction of a proximal free end (20, 34), to form a chamber sized to accommodate the closing head (76A, 76B) enabling the fluid to flow around the head (76A, 76B) out of the duct (18, 32) in the coupling configuration, and to form a sealed contact with the closing head (76A, 76B) in the uncoupled configuration to block the flow of the fluid out of the duct (18, 32).

8. The coupler (10) according to any one of the preceding claims, wherein the body (74) of each valve (70) comprises a distal guide pin extending from a distal portion of the closing head (76A, 76B), around which the elastic return member (72) is coiled and the connector (12, 14) comprises a support (81) for securing this pin.

9. The coupler (10) according to any one of the preceding claims, wherein each connector (12, 14) comprises an inner bore (60) that widens towards a proximal free end (22, 34) and an insert tip (64) that is adaptable within the inner bore (60), which has an axially narrowing section to delimit a convergent proximal region within the internal duct (18, 32) which narrows substantially towards the proximal free end (22, 34) of the connector (12, 14), extending from a divergent distal region.

10. The coupler (10) according to the preceding claim, wherein the inner bore (60) has at least one peripheral radial shoulder (62) and the insert tip (64) is configured to be inserted into the inner bore (60) abutting against said shoulder.

11. The coupler (10) according to any one of the preceding claims, wherein the female connector (14) comprises a housing body (30) with a socket-like general shape and the male connector (12) comprises a housing body (18) comprising an insertion portion (28) with a plug-like general shape configured to fit, up to a final coupling position, inside a coupling clamp (40) formed at the periphery of the body of the female connector (14) and with an axial section having a U-shaped general shape.

12. The coupler (10) according to any one of the preceding claims, wherein the female connector (14) comprises an external peripheral skirt (44) which extends longitudinally from an outer surface of a peripheral wall (38) of the female connector (14) delimiting the inner duct (32) and which extends beyond a proximal free end (34) of this peripheral wall (38).

13. The coupler (10) according to any one of the preceding claims, wherein the male connector (12) comprises a peripheral wall (24) comprising a stepped inner profile provided with a step (26) delimiting a plug-like shaped widened insertion end portion (28).

14. The coupler (10) according to the preceding claim, comprising a locking element (50) displaceable in a locking configuration in which said element (50) prevents the connectors (12, 14) from leaving the final coupling position.

15. The coupler (10) according to the preceding claim, wherein the female connector (14) comprises at least one slot (52) according to a circumferential direction and further comprises a jumper (54) engaged in the slot (52) to retain the male connector (12) within the body (16) of the female connector (14).

16. The coupler (10) according to any one of the preceding claims, wherein each female or male connector (12, 14) is made of a plastic material, for example by injection moulding the plastic material.
